(19)

Europäisches
Patentamt

European
Patent Office

Office européen
des brevets

(11) **EP 4 592 701 A1**

(12) **EUROPEAN PATENT APPLICATION**

(43) Date of publication:
**30.07.2025   Bulletin 2025/31**

(21) Application number: **24153988.1**

(22) Date of filing: **25.01.2024**

(51) International Patent Classification (IPC):
***G01S 5/02*** *(2010.01)*

(52) Cooperative Patent Classification (CPC):
**G01S 5/0273**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Technische Universität München
80333 München (DE)**

(72) Inventor: **The designation of the inventor has not
yet been filed**

(74) Representative: **Lucke, Andreas
Boehmert & Boehmert
Anwaltspartnerschaft mbB
Pettenkoferstrasse 22
80336 München (DE)**

(54) **METHOD AND DEVICE FOR ENHANCED LOCALIZATION**

(57)    The invention refers to a method of localizing a receiver (10) of an indoor wireless communication network (50) comprising one or more transmitters (RT) configured for wirelessly transmitting electromagnetic signals to the receiver (10). The method comprises: i) obtaining a measured identifier (F1) comprising a plurality of signal path distances (d1, ..., dn) covered by electromagnetic signals between the receiver (10) and each of at least some of the transmitters (RT, VT1, VT2, VT3); ii) determining, based on known locations of said each of at least some of the transmitters (RT, VT1, VT2, VT3) and on a first estimated location (P1) of the receiver (10), an inferred identifier (F2) for the receiver (10) Euclidean distances between the first estimated location (P1) and said each of at least some of the transmitters (RT, VT1, VT2, VT3); iii) matching the Euclidean distances (D1, ..., Dn) with the signal path distances (d1, ..., dn) to associate the signal path distances (d1, ..., dn) to corresponding transmitters; and iv) performing at least one trilateration, using at least two of the signal path distances (d1, ..., dn) and the known locations of the corresponding transmitters associated thereto to obtain a second estimated location (P2). The invention further refers to a related localization device and to a related computer program product.

Fig. 4

**Description**

FIELD OF THE INVENTION

The present invention is in the field of localization and refers in particular to a method of enhancing and improving the localization of a receiver in an indoor wireless communication network and to a correspondingly configured system.

BACKGROUND OF THE INVENTION

As the capabilities of mobile devices and the indoor data communication infrastructure advance, the application possibilities and potential of so-called Indoor Localization Systems, ILS grow. Example applications of indoor localization include user localization in public buildings, such as shopping malls and airports, or the localization of industrial equipment in production sites and warehouses.

Unfortunately, conventional outdoor localization technologies are mostly unsuitable for indoor use. The use of GPS is typically not a viable option for localization in indoor environments due to lack of direct visual contact with GPS satellites.

To date, various technologies have been proposed that can locate receivers in an indoor environment. This includes ILS using cameras, infrared signals, magnetic fields and sound, see D. R. Mautz, "Indoor Locationing Technologies," Habilitation thesis, ETH Zurich, February 2012. However, in this case, extra hardware, technology, and additional dedicated data collection steps are required prior to system deployment.

Several existing RF-based geometry reconstruction schemes use ultra wide band (UWB) radars. A radar can produce very accurate images of an indoor environment. However, a very large number of directional measurements needs to be made. This means that dedicated measurements are required to fully reconstruct the indoor environment.

The use of wireless transmitters already present in an indoor environment is hence often a very good option for implementing localization techniques, since no additional infrastructure needs to be installed. Such transmitters can for example be routers or access points, APs, or repeaters of a Wi-Fi network, which are present in most buildings. Locations can then be determined based on measurements of transmission times (flight times) of electromagnetic signals between each of the available transmitters and a receiver performing the measurements.

Most existing WiFi-based localization algorithms are categorized into two groups: trilateration/triangulation and fingerprinting.

Trilateration and triangulation-based algorithms estimate the distances from a receiver to the APs by measuring the time-of-flight or angle-of-arrival of a signal, see C. Yang and H. r. Shao, "Wifi-based indoor locationing," IEEE Communications Magazine, vol. 53, no. 3, pp. 150-157, March 2015 and Y. Jin, N. O'Donoughue, and J. M. F. Moura, "Location location by time reversal in communication networks," in 2008 IEEE International Conference on Acoustics, Speech and Signal Processing, March 2008, pp. 3001-3004. However, like GPS-based algorithms, these algorithms only reliably work in a line-of-sight environment. Notably, since WiFi signals propagate with the speed of light, even tiny measurement or synchronization errors can result in localization errors up to tens of meters.

Fingerprinting typically comprises partitioning the indoor environment into a grid of cells and associating to each cell a characterizing unique fingerprint. The fingerprint may be a certain signal characteristic measurable at the respective partition of space. A previously determined fingerprint is hence subject to iterative improvement by measuring the corresponding signal characteristic.

Fingerprinting-based ILS are discussed in P. Wilk et al., "Indoor radio map maintenance by automatic annotation of crowdsourced wi-fi fingerprints," in 2015 International Conference on Indoor Locationing and Indoor Navigation (IPIN), October 2015, pp. 1-8; F. Lemic et al. "Experimental decomlocation of the performance of fingerprinting-based localization algorithms," in 2014 International Conference on Indoor Locationing and Indoor Navigation (IPIN), October 2014, pp. 355-364; C. Chen et al. "Achieving centimeter-accuracy indoor localization on wifi platforms: A frequency hopping approach," IEEE Internet of Things Journal, vol. 4, no. 1, pp. 111-121, February 2017; Y. Shu et al. "Gradient-based fingerprinting for indoor localization and tracking," IEEE Transactions on Industrial Electronics, vol. 63, no. 4, pp. 2424-2433, April 2016; and C. Chen et al. "Achieving centimeter-accuracy indoor localization on wifi platforms: A multi-antenna approach," IEEE Internet of Things Journal, vol. 4, no. 1, pp. 122-134, February 2017. These ILS typically measure a WiFi fingerprint in multiple locations to create a fingerprint map. A device attempting to localize itself matches its own measurements to the fingerprint map. Although to date, these methods are the most prominent in literature, they still suffer from several drawbacks, such as high sensitivity to changes in the environment, e.g., movement of people and/or objects, such as opening/closing of doors. Furthermore, map construction is a time-consuming and resource-consuming process which needs to be repeated whenever structural changes occur in the environment.

One type of fingerprint known in the literature usable for fingerprinting is multi-path delay profile, MDP, fingerprint. Here, a fingerprint can be defined as a set of propagation distances of a transmission signal, for example between a respective transmitter and a receiver, characterizing a specific partition of space of the considered indoor environment.

These distances can be referred to as multi-path components, MPCs.

In the context of solutions based on electromagnetic waves, an indoor localization system, ILS, is typically a system configured to collect electromagnetic measurements from the APs of a network. During a calibration process of the ILS, such electromagnetic measurements can be collected throughout an indoor environment. If the ILS is based on fingerprinting, it may compare a transmission signal measured from each transmitter to corresponding reference data previously stored in a fingerprint map, as described in A. Zayets and E. Steinbach, "Robust WiFi-based Indoor Localization using Multipath Component Analysis," 2017 International Conference on Indoor Locationing and Indoor Navigation (IPIN), September 2017.

However, even in ILSs comprising a sufficient number of access points allowing in principle a complete determination of the localization of a receiver, for example the localization in a plane relying on three different transmitters or APs arranged at three different locations, it is not possible to exactly determine the location of the receiver due to errors arising, for example, from signal interference, signal reflections at inner walls of the indoor environment or at obstacles, or signal attenuation. Therefore, known ILSs can typically provide a localization accuracy of some meters.

There is hence room for technical improvement regarding the localization accuracy of existing ILS systems.

## SUMMARY OF THE INVENTION

The aim of the present invention is improving the accuracy of existing indoor localization systems, ILSs. This aim is achieved by a method according to claim 1, by a localization device according to claim 12 and by a computer program product according to claim 15. Preferred embodiments of the invention are defined in the dependent claims.

A first aspect of the invention, defined in claim 1, refers to a method of localizing a receiver of an indoor wireless communication network, such as WiFi-network. The wireless communication network further comprises one or more transmitters configured for wirelessly transmitting electromagnetic signals to the receiver. The transmitters may in particular be routers, repeaters, or access points, APs, of the wireless communication network. The method of the invention may be computer-implemented.

The method comprises obtaining, as part of a step i), a measured identifier for the receiver based on a measurement process. The measurement process may be performed by the receiver. The measured identifier comprises entries corresponding to a plurality of signal path distances covered by electromagnetic signals between the receiver and each of at least some of the transmitters, possibly each of the transmitters. The at least some of the transmitters may in particular comprise three or more transmitters. The entries of the measured identifier may be a plurality of signal path distances, wherein each entry may be a first signal path distance, or may be related thereto, for example by a mathematical operation and/or relation.

The measurement process used for obtaining the measured identifier may be based on conventional signal processing techniques, which are known to the skilled person, for extracting from wirelessly transmitted electromagnetic signals, for example from corresponding channel state information, CSI, in particular from a corresponding instantaneous subclass and/or a so-called channel impulse response, CIR, propagation signal path distances covered by the electromagnetic signals between a respective emitter (i.e. a transmitter) and the receiver. Such signal processing techniques may for example comprise a MUSIC algorithm or a SAGE algorithm, to mention some examples.

The measurement process used for obtaining the measured identifier may be carried out by the receiver as a whole or by a component or sub-element of the receiver, for example by a dedicated piece of hardware comprised in the receiver and/or connected thereto, for instance by conventional Wi-Fi sensing device, such as an ESP32 chipset, a Respberry Pi device or an Intel Next Unit of Computing (NUC) device, to cite some examples. Any device able to extract CSI from the electromagnetic signals, in particular an MDP profile, may be used. Thus, the measured identifier may be obtained as a so-called MDP fingerprint, i.e., as a set of propagation distances (signal path lengths) from said each of at least some of the transmitters to the receiver, for example as described in Alexandra Zayets, Eckehard Steinbach, "Robust WiFi-based Indoor Localization using Multipath Component Analysis," 2017 International Conference on Indoor Locationing and Indoor Navigation (IPIN), September 2017. An MDP profile can be understood as a set of multi-path components, MPCs.

It should be noted that, since the measured identifier is obtained from such a measurement process by the receiver, the signal path distances encoded therein correspond to path distances between said each of at least some of the transmitters and a precise real location of the receiver, which remains however unknown to the receiver. The distances may for example be derived from corresponding path delays extractable from peaks in the CIR of the respective electromagnetic signal.

The method further comprises, as part of a step ii), determining an inferred identifier for the receiver based on known locations of said each of at least some of the transmitters and on a first estimated location of the receiver. The inferred identifier comprises entries corresponding to a plurality of Euclidean distances between the first estimated location and said each of the at least some of the transmitters, in particular the pre-known locations thereof. In cases in which the measured identifier comprises signal path distances for all of the transmitters, the measured identifiers may correspondingly comprise Euclidean distances for all of the transmitters too. The entries of the inferred identifier may be a plurality of Euclidean distances between the first estimated location and said each of the at least some of the transmitters, wherein each entry may be one of the Euclidean distances, or may be related thereto, for example by a mathematical operation and/or relation.

The locations of said at least some of the transmitters are known when implementing the method of the invention, i.e., they are provided as input variables, and so is the first estimated location of the receiver, which may for example be obtained from an indoor localization system, i.e., as a conventional ILS measurement to be subsequently improved by virtue of the method of the present invention. In some alternative embodiments, the first estimated location may initially be a randomly generated location.

The first estimated location and each of the locations of the at least some of the transmitters may be provided, for example, as a 3D-vector containing three spatial coordinates. The inferred identifier may be provided as a vector or concatenation of the previously mentioned Euclidean distances. Thus, for a number M of transmitters, the inferred identifier can take the form

$$F2 = \{F2_1, ...., F2_M\}$$

with

$$F2_i = d(P1, P_i) = \sqrt{(x1 - x_i)^2 + (y1 - y_i)^2 + (z1 - z_i)^2}, \text{ for } i = 1,..., M$$

where $P1 = (x1, y1, z1)$ is the first estimated location, $P_i = (x_i, y_i, z_i)$ is the location of the i-th transmitter and $d(P_1, P_i)$ represents the Euclidean distance between $P_1$ and $P_i$.

As mentioned above, the first estimated location may be obtained as an input, for example as an initial guess provided by a conventional ILS. For example, the first estimated location can for example be obtained using a multipath component analysis, MCA, localization algorithm, described in A. Zayets and E. Steinbach, "Robust WiFi-based Indoor Localization using Multipath Component Analysis," 2017 International Conference on Indoor Locationing and Indoor Navigation (IPIN), September 2017. However, it should be noted that any other localization technique may be used.

Since the locations of said at least some of the transmitters are known when implementing the method of the invention, in the measured identifier, each of the Euclidean distances of the inferred identifier is inherently associated to a corresponding one of the at least some of the transmitters. There is a unique relation, in other words a one-to-one map, between the plurality of Euclidean distances $F2_i$ and the at least some of the transmitters. This is in contrast to the situation in the measured identifier, which despite being obtained by way of measurement and based on the real location of the receiver, lacks such associations between the signal path distances and the respective transmitters. This is due to the fact that the electromagnetic signals received at the receiver may indistinguishably correspond to signals directly transmitted from a transmitter to the receiver or to signals reaching the receiver after one or more reflections, for example against walls limiting the indoor environment in which the indoor wireless communication network operates and/or against objects arranged therein.

Thus, while the measured identifier is obtained taking into account the (unknown) precise location of the receiver in the indoor environment, it lacks knowledge about which of the signal path distances comprised therein corresponds to which of the transmitters, whereas the inferred identifier relies on an estimated location of the receiver rather than on the actual location, but includes information about which of the Euclidean distances corresponds to which of the transmitters. The present inventors found out that the combined use of both types of identifier may synergistically interact for the purposes of improving an accuracy of the first estimated location.

The measured identifier and/or the inferred identifier may be or comprise a multi-path delay profile, MDP, fingerprint for the receiver. Thus, the measured identifier and/or the inferred identifier may be or comprise an MDP-fingerprint. An MDP-fingerprint may comprise a concatenation of the corresponding (e.g., first or second) signal path distances of corresponding to the propagation paths electromagnetic signals between the transmitters and the receiver. These distances may be referred to as multi-path components, or short MPCs.

The method further comprises, as part of a step iii), matching the Euclidean distances of the inferred identifier with the signal path distances of the measured identifier, in particular pairwise, to associate each or some of the signal path distances to corresponding transmitters of the at least some of the transmitters, such that mutually associated signal path distances $(d_1, ..., dn)$ and Euclidean distances $(D_1, ..., Dn)$ correspond to the same transmitter. As a result of such matching, all of the signal path distances (components of the measured identifier) or a part thereof inherit the association between transmitters and components of the inferred identifier, i.e., Euclidean distances. The matching hence allows associating some or all of the signal path distances to corresponding transmitters. Any matching technique known to the skilled person may be used, for example a so-called MPC matching mechanism, a similarity metric and/or the matching technique described in EP 3 441 782 A1 or in A. Zayets and E. Steinbach, "Robust WiFi-based Indoor Localization using Multipath Component Analysis," 2017 International Conference on Indoor Locationing and Indoor Navigation (IPIN), September 2017.

Consequently, the Euclidean distances associated to the transmitters by the inferred identifier, which are based on an estimated location, can be replaced, as distances associated to the transmitters, by signal path distances, which are obtained from a measurement process based on the actual location of the receiver and are hence more accurate than the Euclidean distances of the inferred identifier. The closer the first estimated location is to the real location of the receiver, the better the match between the signal path distances and the Euclidean distances will be.

Then, as part of a step iv), at least one trilateration is performed using at least two, preferably at least three of the signal path distances and the known locations of the corresponding transmitters of the at least one transmitters associated thereto, to obtain a second estimated location of the receiver. As used herein, the term "trilateration" comprises "trilaterations" using at least two, preferably at least three signal path distances associated to a respective number of transmitters. Step iv) may comprise performing a single trilateration, for example using three signal path distances and corresponding known transmitter locations, but may also comprise performing a plurality of trilaterations, each trilateration being based on at least two, preferably at least three of the signal path distances and the known locations of the corresponding transmitters of the at least one transmitters associated thereto, wherein different trilaterations may be based on different combinations of the available signal path distances and known transmitter locations. In case different trilaterations deliver different locations of the second estimated location, these results may be combined or chosen from by appropriate algorithms. The implementational details of trilateration are well-known to the skilled person.

The signal path distances used for the trilateration are signal path distances for which an associated transmitter has been identified in the preceding matching step iii) or a subset thereof. Signal path distances for which no associated transmitter has been identified in the preceding matching step iii) can be excluded from the process of performing the trilateration.

The outcome of the trilateration, the second estimated location, is an improved estimated location with respect to the first estimated location, thanks to the additional accuracy introduced by the more accurate signal path distances. The method of the present invention hence allows enhancing an existing localization algorithm by combining fingerprinting with trilateration. The method of the invention delivers a second estimated location that is closer to the actual location of the receiver than the first estimated location.

Notably, if the first estimated location is obtained from an ILS measurement, the method of the present invention accomplishes an improvement of said ILS measurement, since the second estimated location obtained from the method of the invention is more accurate, i.e., closer to the real actual location of the receiver, than the first estimated location originally obtained from the initial ILS measurement. Instead, if the first estimated location is a randomly generated location, the method of the invention may be understood as a localization method, able to produce by itself an estimated location of the receiver, and not merely of improving a pre-existing estimation, as the present inventors found out.

In preferred embodiments of the invention, at least the steps ii) to iv) referred to above, comprising

ii) determining the inferred identifier for the receiver,

iii) matching the Euclidean distances with the signal path distances to associate each or some of the signal path distances to corresponding transmitters of the at least some of the transmitters, such that mutually associated first and Euclidean distances correspond to the same transmitter, and

iv) performing a trilateration, using at least two of the signal path distances and the known locations of the corresponding transmitters associated thereto, to obtain a second estimated location of the receiver,

may be iteratively repeated, wherein the second estimated location obtained in one iteration is used as the first estimated location of a subsequent iteration. This means that the output of step iv) in one iteration is provided as an input to step ii) of the following iteration. Thus, the inferred identifier may be thought of as a dynamic or variable identifier, that takes different values in different iterations depending on the current value of the (first) estimated location, whereas the measured identifier may remain fixed throughout the iterations. Accordingly, step i) may needs not be part of the iteration loop, although step i) may be included in the iteration loop in some embodiments. By virtue of the iteration of at least steps ii) to iv), the accuracy of the second estimated location delivered by the trilateration is iteratively improved. Thus, while the method of the invention can be used as a single-shot method to provide an improved (second) estimated location of the receiver, it is also suitable for being implemented as an iterative algorithm in order to achieve a desired localization accuracy by means of a convergent iteration.

The iterations may preferably be repeated until a convergence criterion is fulfilled. For example, the iterations may be repeated until a difference between the second estimated location and the first estimated location and/or one or more differences between the Euclidean distances and the signal path distances in a given iteration are below a predetermined threshold. The predetermined threshold may for example correspond to a localization accuracy of 50 cm or less, preferably 30 cm or less, more preferably 20 cm or less. However, any other appropriate iteration-stop-criterion may be used, for example a maximal iteration time, such as 60 seconds, or maximal number of iterations.

In preferred embodiments of the invention, the transmitters used in steps i) to iv) may comprise at least one virtual transmitter. As used herein, a virtual transmitter may correspond to a virtual image of a real transmitter. For each virtual transmitter, a Euclidean (line-of-sight) distance from the virtual transmitter to the receiver is identical to a (non-line-of-sight) distance covered by an electromagnetic signal propagating from the corresponding real transmitter to the receiver possibly via one or more reflections, in particular specular or mirror-like reflections.

For this purpose, the method of the invention may comprise computing, for each of one or more real transmitters of the wireless communication network, one or more associated virtual transmitters. Specific techniques for computing virtual transmitters for a real transmitter that may be used for this purpose are described in A. Zayets and E. Steinbach, "Interpolation and Extrapolation of Multipath Fingerprints Using Virtual Transmitter Placement," 2018 IEEE International Conference on Communications (ICC), Kansas City, MO, USA, 2018, pp. 1-7, doi:10.1109/ICC.2018.8422206 and also in A. Zayets, M. Bourguiba and E. Steinbach, "3D Reconstruction of Indoor Geometry using Electromagnetic Multipath Fingerprints," ICC 2019 - 2019 IEEE International Conference on Communications (ICC), Shanghai, China, 2019, pp. 1-7, doi: 10.1109/ICC.2019.8761636.

Thus, from the perspective of a propagating electromagnetic signal and of the corresponding signal path distance, there is no difference between the virtual transmitter and the real transmitter other than the previously mentioned reflections. In the implementation of the method of the present invention, no differentiation between real transmitter and virtual transmitters needs to be made. In other words, the method of the present invention foresees the inclusion of both real and virtual transmitters for the definition of the measured and inferred identifiers, as well as for performing the trilateration(s). By relying on virtual transmitters, the accuracy and convergence efficiency of the method of the invention is improved, since a larger number of pairs of signal path distances with associated transmitters can be obtained in a given time, in particular as compared to a scenario in which only real transmitters were used.

According to preferred embodiments, matching the Euclidean distances with the signal path distances may comprise matching the Euclidean distances, preferably each of them, with the signal path distances, preferably with each of them, pairwise using a similarity metric. "Pairwise" may refer herein to the formation of pairs of associated signal path distances, such that, for each pair, i.e., for each grouping of one of the signal path distances with one of the Euclidean distances, a corresponding similarity score derived from the similarity metric is assigned. Each of the signal path distances may then be associated to a chosen one of the Euclidean distances corresponding to a highest similarity score. If for example, for a given first signal path distance, several Euclidean distances are considered and receive a corresponding similarity score, the Euclidean distance among said Euclidean distances having the highest similarity score will be matched to the first signal path distance according to the method of the invention (and with it a corresponding transmitter). When a first signal path distance and a Euclidean distance are mutually matched, these means that a transmitter corresponding to the Euclidean distance may be assumed to be the same receiver corresponding to the first signal path distance matched thereto. Thus, this way of matching the signal path distances and the Euclidean distances implement a manner for the measured identifier of inheriting the locational knowledge that is encoded in the inferred identifier. Again, it should be stresses that any similarity based matching technique known to the skilled person may be used, for example a so-called MPC matching mechanism, a similarity metric and/or the matching technique described in EP 3 441 782 A1 or in A. Zayets and E. Steinbach, "Robust WiFi-based Indoor Localization using Multipath Component Analysis," 2017 International Conference on Indoor Locationing and Indoor Navigation (IPIN), September 2017.

According to preferred embodiments, matching the Euclidean distances with the signal path distances may comprise using a machine learning algorithm. The machine learning algorithm may be an algorithm specifically trained for such matching, using a corresponding training dataset comprising subsets of mutually associated Euclidean distances and signal path distances and possibly corresponding similarity scores. The machine learning algorithm may be trained by means of supervised learning. The training dataset and the training of the machine learning algorithm can be as described in A. Zayets and E. Steinbach, "Interpolation and Extrapolation of Multipath Fingerprints Using Virtual Transmitter Placement," 2018 IEEE International Conference on Communications (ICC), Kansas City, MO, USA, 2018, pp. 1-7, doi:10.1109/ICC.2018.8422206. Therein, the training is performed in two stages: a clustering stage followed by a cluster matching stage. A number of usable machine learning algorithms are mentioned in this reference.

In preferred embodiments of the invention, obtaining the measured identifier may comprise: extracting the signal path distances from electromagnetic signals received by the receiver from said each of at least some of the transmitters, in particular from a channel impulse response thereof; and providing the measured identifier as a vector comprising the extracted signal path distances.

According to preferred embodiments, performing each of the at least one trilateration may comprise determining an intersection of at least two circles, preferably at least three circles, each circle being centered at one of the known locations of the transmitters, wherein each of the at least two circles, preferably at least three circles, may have a radius corresponding to a respective first signal path distance associated thereto. The second estimated location may then be determined as the location corresponding to said intersection.

A further aspect of the invention refers to a localization device configured for implementing the method of the first aspect of the invention, in particular according to any of the previously described embodiments. The localization device may be configured for communicating with at least a part of an indoor wireless communication network. The wireless communication network may comprise at least one receiver and a one or more transmitters, in particular one or more real transmitters, configured for wirelessly transmitting electromagnetic signals to the at least one receiver.

Preferably, the localization device may be one of the at least one receiver or maybe comprised therein at least in part. The localization device may also be one of the transmitters or maybe comprised therein at least in part. The localization device may however also be a device different from the at least one receiver and the at least one of the transmitters.

The localization device may comprise a virtualization module configured for computing, for each of the one or more real transmitters of the wireless communication network, one or more associated virtual transmitters as defined above.

A further aspect of the invention refers to a computer program product comprising instructions which, when executed by a processor or computer, cause the processor or computer to carry out the method according to any of the previously described embodiments of the first aspect of the invention, wherein the step i) of obtaining the measured identifier may comprise obtaining the measured identifier as an input, without necessarily involving any measurement process.

BRIEF DESCRIPTION OF THE DRAWINGS

Fig. 1 shows a flow diagram of a method of localizing a receiver according to the invention.

Fig. 2 shows a schematic example of the computation of the location of a virtual transmitter.

Fig. 3 shows a schematic example of an indoor wireless communication network, in which a method of localizing a receiver according to the invention can be implemented.

Fig. 4 shows a schematic view of an indoor environment hosting an indoor wireless communication network, to which a method of localizing a receiver according to the invention can be applied.

Fig. 5 shows schematic examples of a measured identifier and an inferred identifier obtained for a receiver of the indoor wireless communication network shown in Fig. 4.

Fig. 6 shows a schematic visualization of a trilateration performed as part of the method of Fig. 1 for the indoor wireless communication network shown in Fig. 4.

DESCRIPTION OF PREFERRED EMBODIMENTS OF THE INVENTION

For the purposes of promoting an understanding of the principles of the invention, reference will now be made to specific preferred embodiments illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to someone skilled in the art to which the invention relates within the scope defined by the claims.

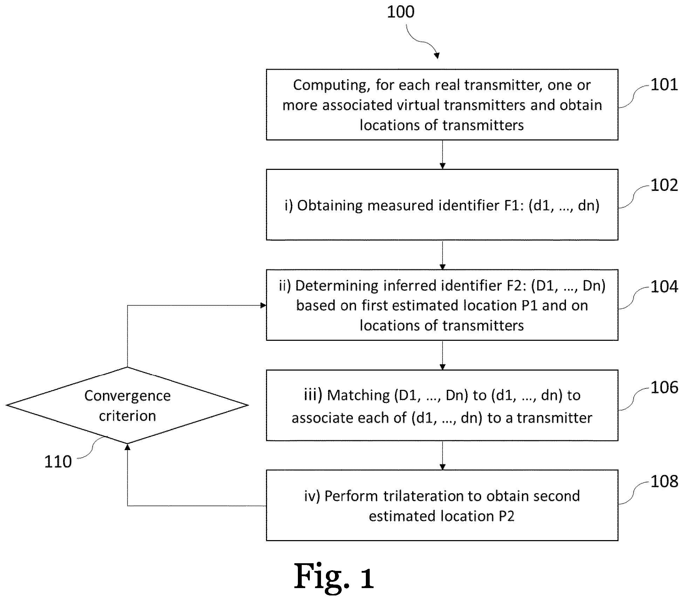

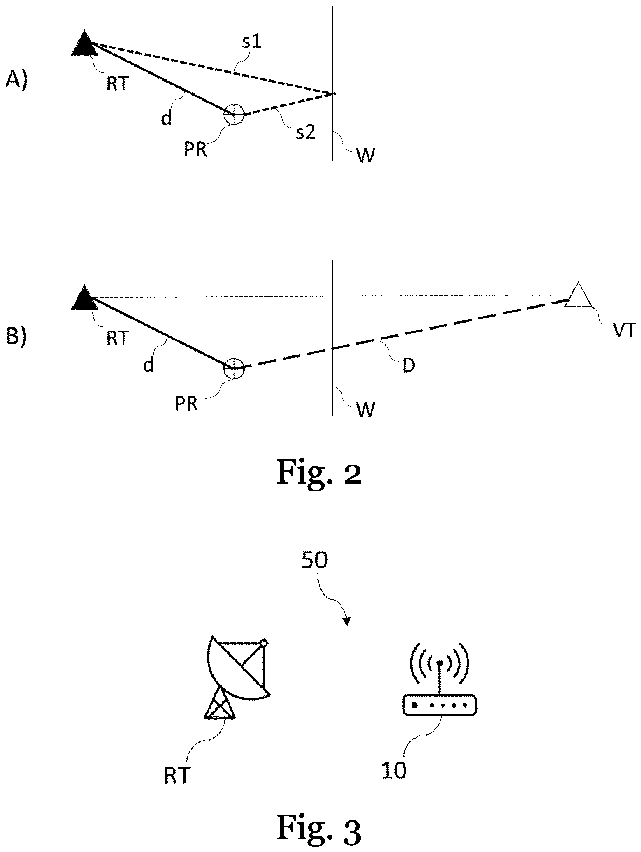

Fig. 1 shows a flow diagram of a method 100 of localising a receiver of an indoor wireless communication network comprising one or more (real) transmitters according to the present invention. The method 100, which may be a computer-implemented method, may be implemented by a component of an indoor wireless communication network 50 as illustrated in in Fig. 3, which comprises a (real) transmitter RT and a receiver 10. For illustrative purposes, the example network 50 of Fig. 3 is shown including one transmitter RT and one receiver 10. However, it will be understood that embodiments of the present invention, the network 50 can comprise a larger number of receivers 10 and a larger number of transmitters RT for each of the receivers 10, with the transmitters in configured for wirelessly transmitting electromagnetic signals to at least one of the receivers 10.

In particular, the method 100 can be implemented by a localization device, which may correspond to or be comprised in the receiver 10, one of the transmitters RT of the network 50 or an independent device different from the receiver 10 and the transmitters, which may be connected to the network 50.

The location of the transmitter RT shown in Fig. 3 is known ab initio. Further, the localization device comprises a virtualization module configured for computing, for the real transmitter 10, one or more associated virtual transmitters.

The concept of a virtual transmitter is exemplarily illustrated in Fig. 2 for a real transmitter RT with respect to a wall element W that can represent an inner wall of an indoor environment, such as a building, or an object or obstacle arranged within such indoor environment.

Fig. 2A shows that an electromagnetic signal can propagate between the transmitter RT and the receiver 10 located in location PR over a distance d following a line-of-sight trajectory. Further, the receiver 10 located in location PR can receive signals originating from reflections of the signals emitted by the transmitter RT. A first reflected signal corresponding to a specular reflection of the signal emitted by the transmitter RT against the wall element W is also received at the receiver 10 after covering a non-line-of-sight trajectory corresponding to the sum of the segments s1 (before the reflection against the wall element W) and s2 (after the reflection against the wall element W).

Fig. 2B illustrates the computation of a virtual transmitter VT associated to the real transmitter RT. While propagating from transmitter RT to receiver at location PR (and vice versa), an electromagnetic signal takes in reality multiple paths instead of only one line-of-sight path between the two points. In a typical indoor environment, an electromagnetic signal will be reflected one or more times by walls, floors, ceilings, objects, obstacles and possibly persons before reaching the receiver.

The previously mentioned virtualisation module of the localization device is configured for setting the location of the virtual transmitter VT such that an electromagnetic signal that were received at the receiver 10 from the virtual transmitter VT via a line-of-sight line trajectory would be indistinguishable from the reflected signal described with respect to Fig. 2A. In other words, the Euclidean distance D corresponds exactly to the sum of Euclidean distances s1+s2 and has a corresponding orientation in space.

Thus, by taking into consideration not only the real transmitter RT of the network 50, but also the virtual transmitter VT, and any other additional virtual transmitters computed in the same manner, it is possible to implement the method of the invention advantageously accounting both for signals that are directly transmitted between the (real) transmitters and the receiver 10, following a line-of-sight trajectory, and for reflected signals that are transmitted between (real) transmitters and the receiver 10 via a reflection against a wall or object of the indoor environment.

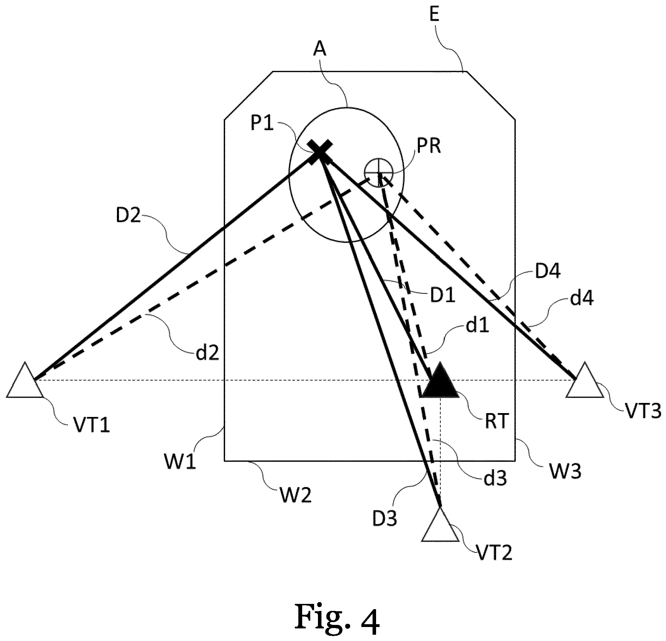

Fig. 4 shows a schematic view of an indoor environment E hosting an indoor wireless communication network like the network 50 of Fig. 3, to which method 100 can be applied for localizing the receiver 10.

In optional step 101 of the method 100, the previously mentioned localization device computes the locations of one or more virtual transmitters associated to each of the real transmitter is of the network. In this simple illustrative embodiment, locations of each of the virtual transmitters VT1, VT2 and VT3 are computed. Thus, as a consequence of step 101, the locations of each of the transmitters RT, VT1, VT2 and VT3, which are indistinguishably referred to herein as "transmitters" in general, are known. Notably, step 101 is optional and may be omitted, for example in embodiments in which the locations of each of the transmitters RT, VT1, VT2 and VT3 can be directly obtained as an input.

As seen in Fig. 4, the virtual transmitter VT1 represents mirror-like reflections of electromagnetic signals emitted by the real transmitter RT against the wall W1 of the indoor environment E, the virtual transmitter VT2 represents mirror-like reflections of electromagnetic signals emitted by the real transmitter RT against the wall W2 of the indoor environment E, and the virtual transmitter VT3 represents mirror-like reflections of electromagnetic signals emitted by the real transmitter RT against the wall W3 of the indoor environment E.

In step 102 of the method 100, a measured identifier F1 is obtained based on a measurement process performed by the receiver 10. The measurement process can comprise receiving by the receiver 10 electromagnetic signals emitted by the real transmitter RT (computationally as if they were emitted from each of the transmitters RT, VT1, VT2 and VT3) and extracting, from each of the electromagnetic signals, in particular from corresponding channel state information, CSI, a respective signal path distance corresponding, in each case, to a distance between the respective transmitter and the receiver 10. Thus, a set of signal path distances d1, d2, d3, d4 is obtained as a result of step 102, which respectively correspond to a distance between RT and the receiver 10, between VT1 and the receiver 10, between VT2 and the receiver 10, and between VT3 and the receiver 10, as seen in Fig. 4. The distances d1, d3, d3 and d4 can for example be derived by the receiver 10 from corresponding path delays extractable from peaks in the CIR of the respective electromagnetic signal.

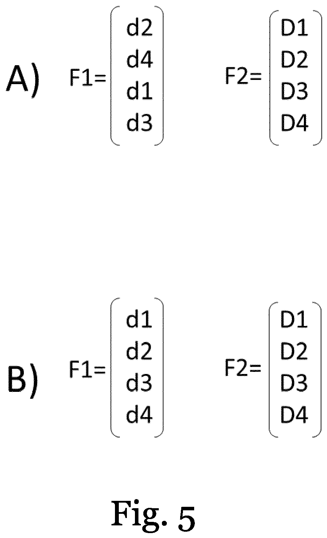

Fig. 5A shows an exemplary illustration of the measured identifier F1, which in this case is a vector containing four entries, each of them being one of the signal path distances d1, d2, d3, d4. Notably, the signal path distances d1, d2, d3, d4 are not represented in order in the measured identifier F1, to represent the fact that, in the measured identifier F1, the different signal path distances d1, d2, d3, d4 are not associated to respective transmitters. For example, for the distance d1, at this stage of the method 100, it is known that it corresponds to a distance covered by electromagnetic signals propagating between the receiver 10 and one of the transmitters, that it is not known whether this transmitter is RT, VT1, VT2 or VT3.

In step 104 of the method 100, an inferred identifier F2 is determined based on the known locations of the transmitters RT, VT1, VT2 and VT3 and on a known first estimated location P1, which is indicated in Fig. 4. The first estimated location P1 can be obtained from a preceding ILS measurement as a first approximated guess for the relocation of the receiver 10. In this case, the first estimated location P1 will have a certain degree of inaccuracy and may be located within an area A around the real location PR of the receiver 10. Alternatively, the first estimated location P1 can be randomly generated.

After providing as inputs the first estimated location and the locations of the transmitters RT, VT1, VT2 and VT3, Euclidean distances between the first estimated location P1 and each of the transmitters RT, VT1, VT2 and VT3 are computed and provided as entries of the inferred identifier F2.

Fig. 5B shows an exemplary illustration of the inferred identifier F2, which is a vector containing four Euclidean distances D1, D2, D3 and D4, each of them being one of the Euclidean distances between the first estimated location P1 and one of the transmitters RT, VT1, VT2 and VT3. Notably, the distances D1, D2, D3, D4 are represented in order in the inferred identifier F2, to represent the fact that the inferred identifier F2 inherently encodes a unique one-to-one association between each of the Euclidean distances D1, D2, D3 and D4 and a corresponding one of the transmitters. As seen in Fig. 4, the distance D1 is a Euclidean distance between the first estimated location P1 and the transmitter RT, the distance D2 is a Euclidean distance between the first estimated location P1 and the transmitter VT1, the distance D3 is a Euclidean distance between the first estimated location P1 and the transmitter VT2, and the distance D4 is a Euclidean distance between the first estimated location P1 and the transmitter VT3.

Thus, the measured identifier F1 and the inferred identifier F2 are each configured as a MDP fingerprint. The measured identifier encodes precise signal path distances d1, d2, d3, d4 between the receiver 10 and each of the transmitters RT, VT1, VT2 and VT3 without knowing how to map the signal path distances to the transmitters, while the inferred identifier encodes estimated Euclidean distances D1, D2, D3, D4 between the first estimated location P1 (being a first guess of the location of the receiver 10) and each of the transmitters RT, VT1, VT2 and VT3, with each of the Euclidean distances D1, D2, D3, D4 being associated to a corresponding one of the transmitters RT, VT1, VT2 and VT3.

In step 106 of method 100, the Euclidean distances D1, D2, D3, D4 are matched to the signal path distances d1, d2, d3, d4, to associate, each of the signal path distances d1, d2, d3, d4 or at least some of them, to corresponding transmitters. For example, if the Euclidean distance D2 is associated to the first signal path distance d2, since the Euclidean distance D2 is associated to the transmitter VT1 (cf. Fig. 4), this association is inherited by the first signal path distance d2, implying that the first signal path distance d2 is also associated to the same transmitter VT1.

The matching in step 106 can be based on forming pairs of one of the signal path distances d1, d2, d3, d4 and one of the Euclidean distances D1, D2, D3, D4, possibly covering all combinatorial possibilities, i.e. (d1, D1), (d1, D2), .... , (d4, D4), (d4, D4), and on using a similarity metric for associated to each of the pairs a corresponding similarity score. For example, the similarity metric and the similarity scoring presented in EP 3 441 782 A1 or in A. Zayets and E. Steinbach, "Robust WiFi-based Indoor Localization using Multipath Component Analysis," 2017 International Conference on Indoor Locationing and Indoor Navigation (IPIN), September 2017 can be used for this purpose. For the matching, a pair corresponding to a highest similarity score is chosen for each of the signal path distances d1, d2, d3, d4. For example, for d2, the pair (d2, D2) may have a highest similarity score among the pairs (d2, D1), (d2, D2), (d2, D3) and (d2, D4), leading to the association of the distance d2 with the transmitter VT1, which was associated to D2.

Additionally or alternatively, a machine learning algorithm trained to match signal path distances to Euclidean distances can be sued for the matching in step 106. The machine learning algorithm and the training thereof can be as described in detail in A. Zayets and E. Steinbach, "Interpolation and Extrapolation of Multipath Fingerprints Using Virtual Transmitter Placement," 2018 IEEE International Conference on Communications (ICC), Kansas City, MO, USA, 2018, pp. 1-7, doi:10.1109/ICC.2018.8422206.

After the matching in step 106, not only are the entries of the inferred identifier F2, i.e. the Euclidean distances, associated to corresponding transmitters, but so are the entries of the measured identifier F1, i.e. the signal path distances. This is schematically shown in Fig. 5B, in which also the measured identifier F1 is shown comprising an ordered set of distances d1, d2, d3, d4, unlike in Fig. 5A, which illustrates the situation before the matching, when the distance-to-transmitter associations had not been inherited by the measured identifier F1 from the inferred identifier F2 yet.

Thereafter, in step 108, a trilateration is performed using at least two, preferably at least three of the signal path distances d1, d2, d3, d4 for which an associated transmitter could be identified in the preceding matching step. In case less than two, preferably less than three associations between one of the signal path distances and a corresponding transmitter could be identified in the preceding matching step, the method can be aborted. If at least two, preferably at least three associations between one of the signal path distances and a corresponding transmitter were identified in the preceding matching step, the method can comprise discarding or filtering out those remaining signal path distances to which no corresponding transmitter could be associated. In the present example, it will be assumed that associations between each of the signal path distances d1, d2, d3, d4 and the corresponding transmitters RT, VT1, VT2, VT3 could be identified in the preceding matching step 106.

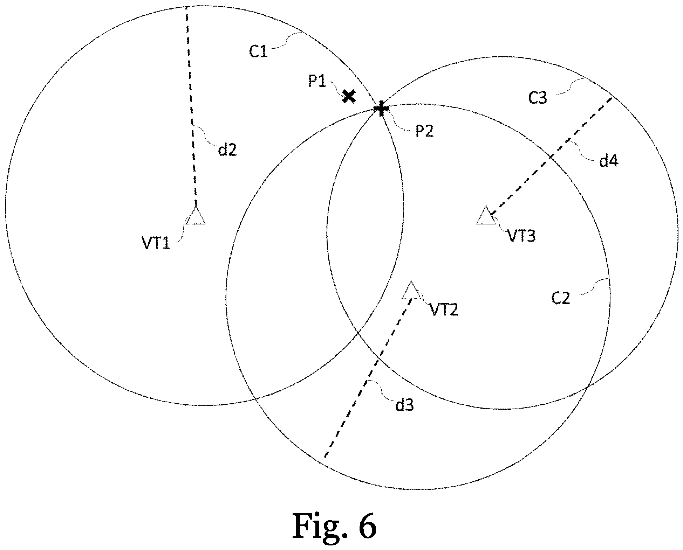

As a schematically illustrated in Fig. 6, the trilateration in step 108 can be performed by defining, for example for each of the signal path distances d2, d3 and d4, a circle C1, C2, C3 having as a radius the corresponding first signal path distance d2, d3 or d4 and centered at the known location of the transmitter associated thereto. Thus, circle C1 is centered at the location of the transmitter VT1 and has a radius corresponding to the distance d2, circle C2 is centered at the location of the transmitter VT2 and has a radius corresponding to the distance d3, and circle C3 is centered at the location of the transmitter VT3 and has a radius corresponding to the distance d4.

The location corresponding to the intersection of the three circles C1, C2 and C3 is taken as a second estimated location P2.

Since the trilateration is enriched by the real distances obtained from the measured identifier F1, the resulting second estimated location P2 will be more accurate than the first estimated location P1, i.e., closer to the real location of the receiver 10.

In embodiments in which the first estimated location P1 was obtained from an ILS measurement, the second estimated location P2 provides an improved estimated location of the receiver 10 that enhances the ILS measurement. In embodiments in which the first estimated location The1 was a randomly generated location, the second estimated location P2 can be a first approximated guests of the real location of the receiver 10.

In either case, the accuracy of the second estimated location P2 can be iteratively improved by iteratively repeating steps ii), iii) and iv) until a convergence criterion 110 is fulfilled, wherein, for each iteration after the first iteration, the second estimated location P2 of the preceding iteration is taken as a first estimated location P1. Thereby, a self-improvement loop is implemented, by which the second estimated location is improved step-by-step and moves closer and closer to the real location of the receiver 10. The convergence criterion 110 can be for example be a predefined number of iterations, a predefined computing time, or a predetermined threshold below which a difference between the second estimated location P2 and the first estimated location P1 is considered to be acceptable enough for the iteration loop to be stopped.

Although preferred exemplary embodiments are shown and specified in detail in the drawings and the preceding specification, these should be viewed as purely exemplary and not as limiting the invention. It is noted in this regard that only the preferred exemplary embodiments are shown and specified, and all variations and modifications should be protected that presently or in the future lie within the scope of protection of the invention as defined in the claims.

**Claims**

1. A method of localizing a receiver (10) of an indoor wireless communication network (50), wherein the wireless communication network (50) comprises one or more transmitters (RT) configured for wirelessly transmitting electromagnetic signals to the receiver (10), wherein the method comprises:

   i) obtaining, based on a measurement process, a measured identifier (F1) for the receiver, wherein the measured identifier (F1) comprises entries corresponding to a plurality of signal path distances ($d_1$, ..., dn) covered by electromagnetic signals between the receiver (10) and each of at least some of the transmitters (RT, VT1, VT2, VT3),

   ii) determining, based on known locations of said each of at least some of the transmitters (RT, VT1, VT2, VT3) and on a first estimated location (P1) of the receiver (10), an inferred identifier (F2) for the receiver (10) comprising entries corresponding to a plurality of Euclidean distances between the first estimated location (P1) and said each of at least some of the transmitters (RT, VT1, VT2, VT3),

   iii) matching the Euclidean distances ($D_1$, ..., Dn) with the signal path distances ($d_1$, ..., dn) to associate each or some of the signal path distances ($d_1$, ..., dn) to corresponding transmitters of the at least some of the transmitters (20-1, 20-2, 20-3), such that mutually associated signal path distances ($d_1$, ..., dn) and Euclidean distances ($D_1$, ..., Dn) correspond to the same transmitter, and

   iv) performing at least one trilateration, using at least two of the signal path distances ($d_1$, ..., dn) and the known locations of the corresponding transmitters of the at least some of the transmitters (20-1, 20-2, 20-3) associated thereto, to obtain a second estimated location (P2) of the receiver (10).

2. The method of claim 1, wherein, wherein the first estimated location (P1) of the receiver (10) is obtained from an indoor localization system, ILS or is a randomly generated location.

3. The method of claim 1 or 2, wherein each of the Euclidean distances ($D_1$, ..., Dn) is uniquely associated to a corresponding one of said at least some of the transmitters (RT, VT1, VT2, VT3).

4. The method of any of the preceding claims, wherein the measured identifier (F1) comprises or is a multi-path delay profile, MDP, fingerprint.

5. The method of any of the preceding claims, wherein steps ii) to iv) are iteratively repeated, wherein the second estimated location (P2) obtained in one iteration is used as the first estimated location (P1) of a subsequent iteration, wherein the iterations are preferably repeated until a convergence criterion is.

6. The method of any of the preceding claims, wherein the transmitters (RT, VT1, VT2, VT3) used in steps i) to iv) comprises at least one virtual transmitter corresponding to a virtual image of a real transmitter, wherein for each virtual transmitter, a Euclidean distance from the virtual transmitter to the receiver (10) is identical to a distance covered by an electromagnetic signal propagating from the corresponding real transmitter to the receiver via one or more reflections.

7. The method of any of the preceding claims, wherein matching the Euclidean distances (D1, ..., Dn) with the signal path distances ($d_1$, ..., dn) comprises matching the Euclidean distances ($D_1$, ..., Dn) with the signal path distances ($d_1$, ..., dn) pairwise using a similarity metric, wherein the similarity metric preferably associates to each pair of distances comprising one of the signal path distances ($d_1$, ..., dn) and one of the Euclidean distances ($D_1$, ..., Dn) a corresponding similarity score, wherein each of the signal path distances ($d_1$, ..., dn) is more preferably associated to a chosen one of the Euclidean distances ($D_1$, ..., Dn) corresponding to a highest similarity score.

8. The method of any of the preceding claims, wherein matching the Euclidean distances ($D_1$, ..., Dn) with the signal path distances ($d_1$, ..., dn) comprises using a machine learning algorithm trained for such matching, using a corresponding training data set comprising subsets of mutually associated Euclidean distances ($D_1$, ..., Dn) and signal path distances ($d_1$, ..., dn).

9. The method of any of the preceding claims, wherein obtaining the measured identifier (F1) comprises:

extracting the signal path distances ($d_1$, ..., dn) from electromagnetic signals received by the receiver from said each of at least some of the transmitters (RT, VT1, VT2, VT3), in particular from a channel impulse response thereof; and providing the measured identifier (F1) as a vector comprising the extracted signal path distances ($d_1$, ..., dn).

10. The method of any of the preceding claims, wherein performing each of the at least one trilateration comprises determining an intersection of at least two, preferably at least three circles, each centered at one of the known locations of the transmitters (RT, VT1, VT2, VT3), each of the at least two, preferably at least three circles having a radius corresponding to a respective signal path distance ($d_1$, ..., dn) associated thereto; wherein the second estimated location (P2) is determined as a location corresponding to said intersection.

11. The method of any of the preceding claims, further comprising computing, for each of one or more real transmitters of the plurality of transmitters of the wireless communication network, one or more associated virtual transmitters as defined in claim 6.

12. A localization device configured for communicating with at least a part of an indoor wireless communication network (50), the wireless communication network (50) comprising at least one receiver (10) and one or more transmitters (RT) configured for wirelessly transmitting electromagnetic signals to the at least one receiver (10), wherein the localization device is configured for implementing a method according to any of the preceding claims.

13. The localization device of claim 12, wherein the localization device is one of the at least one receiver or is comprised therein at least in part; or wherein the localization device is one of the transmitters or is comprised therein at least in part; or wherein the localization device is a device different from the at least one receiver and the one or more transmitters.

14. The localization device of claim 12 or 13, further comprising a virtualization module configured for computing, for each of the one or more transmitters of the wireless communication network, one or more associated virtual transmitters as defined in claim 6.

15. A computer program product comprising instructions which, when executed by a processor or computer, cause the processor or computer to carry out the following steps:

i) obtaining a measured identifier (F1) comprising entries corresponding to a plurality of signal path distances ($d_1$, ..., dn) followed by electromagnetic signals between the receiver (10) and each of at least some of the transmitters (RT, VT1, VT2, VT3), ii) determining, based on known locations of said each of at least some of the transmitters (RT, VT1, VT2, VT3) and on a first estimated location (P1) of the receiver (10), an inferred identifier (F2) for the receiver (10) comprising entries corresponding to a plurality of Euclidean distances between the first estimated location (P1) and said each of at least some of the transmitters (RT, VT1, VT2, VT3),

iii) matching the Euclidean distances ($D_1$, ..., Dn) with the signal path distances ($d_1$, ..., dn) to associate each or some of the signal path distances ($d_1$, ..., dn) to corresponding transmitters of the at least some of the transmitters (20-1, 20-2, 20-3), such that mutually associated signal path distances ($d_1$, ..., dn) and Euclidean distances ($D_1$, ..., Dn) correspond to the same transmitter, and

iv) performing at least one trilateration, using at least two of the signal path distances ($d_1$, ..., dn) and the known locations of the corresponding transmitters of the at least some of the transmitters (20-1, 20-2, 20-3) associated thereto, to obtain a second estimated location (P2) of the receiver (10).

100

Computing, for each real transmitter, one or more associated virtual transmitters and obtain locations of transmitters —101

i) Obtaining measured identifier F1: (d1, ..., dn) —102

ii) Determining inferred identifier F2: (D1, ..., Dn) based on first estimated location P1 and on locations of transmitters —104

Convergence criterion

110

iii) Matching (D1, ..., Dn) to (d1, ..., dn) to associate each of (d1, ..., dn) to a transmitter —106

iv) Perform trilateration to obtain second estimated location P2 —108

# Fig. 1

A)

B)

# Fig. 2

50

RT                    10

# Fig. 3

Fig. 4

A) $F1 = \begin{bmatrix} d2 \\ d4 \\ d1 \\ d3 \end{bmatrix}$  $F2 = \begin{bmatrix} D1 \\ D2 \\ D3 \\ D4 \end{bmatrix}$

B) $F1 = \begin{bmatrix} d1 \\ d2 \\ d3 \\ d4 \end{bmatrix}$  $F2 = \begin{bmatrix} D1 \\ D2 \\ D3 \\ D4 \end{bmatrix}$

Fig. 5

Fig. 6

# EUROPEAN SEARCH REPORT

**Application Number**

EP 24 15 3988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Leitinger Erik ET AL: "Robust and Accurate Indoor Localization using Channel Information", IC1004 TD(15)12067, 25 January 2015 (2015-01-25), XP093186793, * figure 1 * * pages 1 and 2, sections A and B * | 1-15 | INV. G01S5/02 |
| X | JESPERSEN MADS H ET AL: "An indoor multipath-assisted single-anchor UWB localization method", 2018 IEEE MTT-S INTERNATIONAL WIRELESS SYMPOSIUM (IWS), IEEE, 6 May 2018 (2018-05-06), pages 1-3, XP033369289, DOI: 10.1109/IEEE-IWS.2018.8400983 [retrieved on 2018-06-29] * figures 1,2 * * page 2, sections II-III * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 18 July 2024 | Hekmat, Taymoor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3441782 A1

### Non-patent literature cited in the description

- Indoor Locationing Technologies. **D. R. MAUTZ**. Habilitation thesis. ETH Zurich, February 2012
- **C. YANG** ; **H. R. SHAO**. Wifi-based indoor locationing. *IEEE Communications Magazine*, March 2015, vol. 53 (3), 150-157
- **Y. JIN** ; **N. O'DONOUGHUE** ; **J. M. F. MOURA**. Location location by time reversal in communication networks. *2008 IEEE International Conference on Acoustics, Speech and Signal Processing*, March 2008, 3001-3004
- **P. WILK et al.** Indoor radio map maintenance by automatic annotation of crowdsourced wi-fi fingerprints. *2015 International Conference on Indoor Locationing and Indoor Navigation (IPIN),*, October 2015, 1-8
- **F. LEMIC et al.** Experimental decomlocation of the performance of fingerprinting-based localization algorithms. *2014 International Conference on Indoor Locationing and Indoor Navigation (IPIN),*, October 2014, 355-364
- **C. CHEN et al.** Achieving centimeter-accuracy indoor localization on wifi platforms: A frequency hopping approach. *IEEE Internet of Things Journal*, February 2017, vol. 4 (1), 111-121

- **Y. SHU et al.** Gradient-based fingerprinting for indoor localization and tracking. *IEEE Transactions on Industrial Electronics,*, April 2016, vol. 63 (4), 2424-2433
- **C. CHEN et al.** Achieving centimeter-accuracy indoor localization on wifi platforms: A multi-antenna approach. *IEEE Internet of Things Journal*, February 2017, vol. 4 (1), 122-134
- **A. ZAYETS** ; **E. STEINBACH**. Robust WiFi-based Indoor Localization using Multipath Component Analysis. *2017 International Conference on Indoor Locationing and Indoor Navigation (IPIN)*, September 2017
- **ALEXANDRA ZAYETS** ; **ECKEHARD STEINBACH**. Robust WiFi-based Indoor Localization using Multipath Component Analysis. *2017 International Conference on Indoor Locationing and Indoor Navigation (IPIN)*, September 2017
- **A. ZAYETS** ; **E. STEINBACH**. Interpolation and Extrapolation of Multipath Fingerprints Using Virtual Transmitter Placement. *2018 IEEE International Conference on Communications (ICC), Kansas City, MO, USA*, 2018, 1-7
- **A. ZAYETS** ; **M. BOURGUIBA** ; **E. STEINBACH**. 3D Reconstruction of Indoor Geometry using Electromagnetic Multipath Fingerprints. *ICC 2019 - 2019 IEEE International Conference on Communications (ICC), Shanghai, China*, 2019, 1-7